# EUROPÄISCHE PATENTSCHRIFT

(11) **EP 1 367 233 B1**
(45) Veröffentlichungstag und Bekanntmachung des Hinweises auf die Patenterteilung: **31.08.2011**
(21) Anmeldenummer: 03010438.4
(22) Anmeldetag: 09.05.2003
(51) Int. Cl.: F01N 3/023, F01N 3/035, F01N 3/28, F02D 41/02

(54) **Vorrichtung zur Reduzierung von im Abgas enthaltenen Russpartikeln eines Fahrzeugdieselmotors**
Device to reduce soot particles contained in the exhaust gas of a diesel engine of a motor vehicle
Dispositif pour la réduction des particules de suie contenues dans les gaz d'échappement d'un véhicule à moteur diesel

(30) Priorität: 28.05.2002 DE 10223736
(43) Veröffentlichungstag der Anmeldung: 03.12.2003
(73) Patentinhaber: MAN Truck & Bus AG, 80995 München (DE)
(72) Erfinder: Kreutmair, Josef, Dipl.-Ing. (FH), 85276 Pfaffenhofen (DE); Knetsch, Holger, 85221 Dachau (DE); Raschke, Michael, Dipl.-Ing., 28777 Bremen (DE)

(56) Entgegenhaltungen:
- EP-A- 0 341 832
- EP-A- 1 262 641
- WO-A-00/34632
- WO-A-01/97952
- DE-A- 10 003 596

## Beschreibung

Die Erfindung betrifft eine Vorrichtung nach dem Oberbegriff des Anspruches 1.

Aus der EP 0 341 832 B1 ist ein Verfahren mit einem Filter zur Entfernung von Rußpartikeln und eine Vorrichtung hierzu bekannt.

Bei dem genannten Patentgegenstand wird zuerst in einem Oxidationskatalysator ein Teil des im Abgas enthaltenen Stickoxides NO zu NO₂ oxidiert. Das Stickstoffdioxid NO₂ reagiert nun bei unter 400°C mit dem im nachgeschaltenen Filter, der Rußpartikel aus dem Abgas herausgefiltert hat, herausgefilterten Ruß, der oxidiert wird und als CO₂ und CO entweicht.

Das Problem dieses Erfindungsgegenstandes ist, dass das Filter relativ schnell zusetzt. Um größere Schäden zu vermeiden, muss entweder nach einer relativ kurzen Fahrstrecke, die fahrzeugabhängig ist, das Filter gewechselt, oder eine Sensierungs- und Anzeigeeinrichtung vorgesehen werden, damit erkennbar ist, wann das Filter gewechselt werden muss.

Der genannte Patentgegenstand ist demnach sehr sensibel und bei Verwendung teuer.

Weiterhin ist aus der DE 100 03 596 A1 eine Vorrichtung zur Filterung von Dieselmotorabgasen bekannt. Bei dieser Vorrichtung sind in einem Filtergehäuse zwei Filterelemente untergebracht, die über ein Verteilerventil und danach stromabwärts über je eine separate Leitung unterschiedlich oder gleichmäßig beaufschlagbar sind.

Wenn ein Filterelement verstopft ist, wird dieses über das Verteilerventil mit einem geringeren, definierten Abgasstrom beaufschlagt und dann kann durch Zuschaltung eines Heizelementes der aufgefangene Ruß im Filterelement abgebrannt werden. Das Heizelement erhitzt den geringeren Abgasstrom auf die erforderliche Reaktionstemperatur. Da der Vorgang automatisch erfolgen muss, ist die entsprechende Einrichtung für die Automatik vorzusehen.

Dokument WO 00/34682 offenbart eine Vorrichtung zur Radziehung von im Abgas enthaltenen Rußpartikeln einer Fahrzeugdieschmotors der aus mehreren Katalysatoren besteht.

Aufgabe der Erfindung ist es, eine robuste und preiswerte Abgasnachbehandlung bezüglich der Rußpartikel im Abgas zu ermöglichen.

Die Aufgabe wird erfindungsgemäß durch die Merkmale des Anspruches 1 gelöst.

Dadurch, dass mittels eines Rußpartikelkatalysators, der aus mehreren Katalysatoren, die hintereinandergeschaltet sind und diese Katalysatoren unterschiedliche Zellteilungen aufweisen, der Ruß bzw. die Rußpartikel chemisch umgewandelt werden, wird eine ausreichende Entrußung des Abgases von Dieselmotoren erreicht. Die Katalysatoren können in einem Schalldämpfergehäuse untergebracht sein.

Die Zellen sind, in Längsrichtung betrachtet, bei jedem Katalysator durchgängig.

Der erste Katalysator des Rußpartikelkatalysators ist ein bekannter NOₓ Oxidationskatalysator, der einen Teil des im Abgas enthaltenen NO mit dem ebenso im Abgas enthaltenen Sauerstoff O₂ zu Stickstoffdioxid NO₂ umwandelt.

Durch diese Oxidation von Stickstoffoxid NO zu NO₂ wird erreicht, dass der Anteil des NO₂ im Abgas erhöht wird und dadurch und danach die Reaktion mit dem Kohlenstoff C zu CO und CO₂ besser ablaufen kann.

Nach dem Oxidationskatalysator, der eine Zelligkeit von 50 bis 400 cpsi hat, das 7,75 bis 62 Zellen pro cm² entspricht, gelangt das Abgas in den ersten Rußumwandlerkatalysator. Der erste Rußumwandlerkatalysator hat eine Zelligkeit von zum Beispiel 300 bis 800 cpsi, das entspricht 46,5 bis 124 Zellen pro cm².

Der genannte Rußumwandlerkatalysator hat eine katalytisch aktive Beschichtung, wie z. B. Divanadiumpentoxid V₂O₅. Die auf dem Rußumwandlerkatalysator abgelagerten Rußpartikel C werden bei der Reaktionstemperatur und oberhalb davon mit dem im Abgas enthaltenen Stickstoffdioxid NO₂ zu Kohlemmonoxid CO und Kohlendioxid CO₂ oxidiert und das NO₂ zu N₂ reduziert und kann als unschädliches Gas entweichen. Unterhalb der Reaktionstemperatur lagern sich die Rußpartikel auf den Oberflächen der Katalysatorkanäle ab.

Der zweite Rußumwandlerkatalysator ist ein feinzelliger Katalysator mit einer Zelligkeit von zum Beispiel 600 bis 1.200 cpsi, das entspricht 93 bis 186 Zellen pro cm². Die katalytisch aktive Beschichtung kann die gleiche, wie beim ersten Rußumwandlerkatalysator sein.

Durch die Feinzelligkeit des zweiten Rußumwandlerkataysators wird eine große aktive Oberfläche für die Umwandlung des abgelagerten Rußes C in Kohlenmomoxid CO und Kohlendioxid CO₂ auf geringen Raum angeboten.

In der Praxis werden sich, je nach Fahrzeugart und den spezifischen Einsatzbedingungen des Fahrzeuges vom Mantel des Schalldämpfers her beginnend, zumindest im zweiten Rußumwandlerkatalysator die Zellen verengen oder sogar teilweise zusetzen.

Durch dieses Verengen erhöht sich die Strömungsgeschwindigkeit in den noch offenen, wenig mit Ruß belasteten Zellen. Durch diesen Effekt bleibt zumindest ein großer Teil der Zellen immer offen und chemisch aktiv.

Wenn nun eine längere Zeit, z. B. bei einer Autobahnfahrt, halbe Volllast oder mehr, relativ konstant gefahren wird, wird die Reaktionstemperatur auch in den mit Rußpartikeln dicker belegten Waben erreicht und der Ruß kann auch dann hier chemisch umgewandelt werden. Ein Zusetzen des Rußpartikelkatalysators, wie dies bei einem Filter auftreten kann, ist hier sehr unwahrscheinlich.

Im Normalfall und wenn das Fahrzeug nicht nur im Stadtbereich eingesetzt wird, ist eine Einrichtung zur Erfassung des Abgasgegendruckes nicht erforderlich.

Die Rußumwandlerkatalysatoren sind vorzugsweise aus nichtrostendem Stahlblech in den bekannten Ausgestaltungen. Es sind aber auch Keramikmonolithen verwendbar.

Die Oberflächen der Rußumwandlerkatalysatoren sind mit einer katalytisch aktiven Beschichtung gegenüber Kohlenstoff, wie z. B. Divanadiumpentoxid V₂O₅, versehen.

Bei Fahrzeugen, die hauptsächlich im Stadtbereich oder nur im Stadtbereich eingesetzt sind, muss eine Einrichtung zur Erfassung des Abgasgegendruckes vorgesehen sein.

Ab einem bestimmten oberen Wert des Gegendruckes ist anzunehmen, dass sich viele Kanäle des Rußpartikelkatalysators durch die Ablagerung von Rußpartikeln verengt haben.

Hier muss die Abgastemperatur auf über die Temperatur des Beginnes der chemischen Rektion mit dem Kohlenstoff, z. B. auf 350°C und darüber, beispielsweise durch Nacheinspritzung im Dieselmotor, angehoben werden.

Die Nacheinspritzung im Dieselmotor erfolgt während des normalen Betriebseinsatzes des Fahrzeuges und wird vom Bordrechner veranlasst, ohne Zutun des Fahrzeugführers.

Für die genannten Fahrzeuge, die also fast nur im unteren Teillastbereich betrieben werden, ist eine vom Bordrechner veranlasste Temperaturerhöhung des Abgases unbedingt erforderlich, da sonst der Dieselmotor oder die Aufladegruppe kollabieren kann.

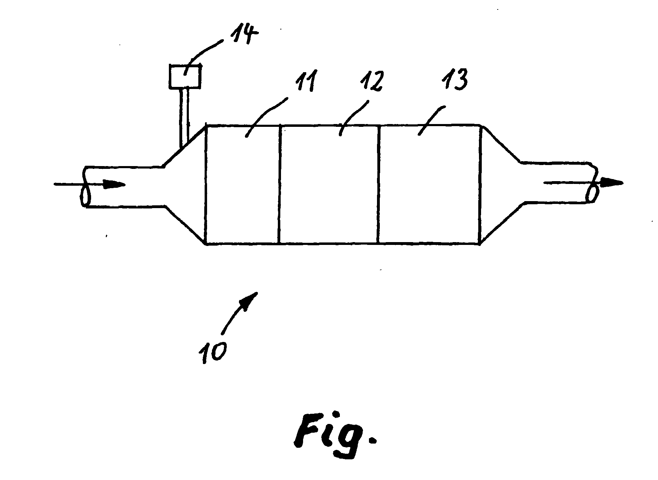

In der Zeichnung ist ein Ausführungsbeispiel der Erfindung schematisch dargestellt.

Die Figur zeigt:
- den Rußpartikelkatalysator 10, der im Schalldämpfer 10 integriert ist,
- den Noₓ Oxidationskatalysator 11,
- den mittelfeinzelligen ersten Rußumwandlerkatalysator 12 mit einer Zelligkeit von ca. 300 bis 800 cpsi,
- den zweiten feinzelligen Rußumwandlerkatalysator 13 mit einer Zelligkeit von ca. 600 bis 1.200 cpsi,
- die Einrichtung 14 zur Erfassung des Abgasgegendruckes 14, die die erfassten Werte als Signale an den Bordrechner liefert (nicht gezeichnet).

## Patentansprüche

1. Vorrichtung zur Reduzierung von im Abgas enthaltenen Rußpartikeln (C) eines Fahrzeugdieselmotors, wobei im Abgas auch Stickoxide (NOₓ) und Sauerstoff (O₂) enthalten sind, mit einer elektronisch gesteuerten Treibstoffzumessung für den Dieselmotor, mit einem Bordrechner oder gleichwertigen Rechner, mit einem Schalldämpfer im Abgastrakt und mit einem Sensor für den Abgasgegendruck, wobei die Rußpartikel (C) chemisch in einem Rußpartikelkatalysator (10), der aus mehreren Katalysatoren (11, 12, 13) mit unterschiedlicher Zelligkeit und durchgängigen Zellen besteht, zu Kohlendioxid (CO₂) und Kohlenmonoxid (CO) umgewandelt werden,
**dadurch gekennzeichnet, dass** der Rußpartikelkatalysator (10) im Schalldämpfer integriert ist und aus einem NOₓ Oxidationskatalysator (11) mit einer Zellteilung von 50 bis 400 cpsi (= 7,75 bis 62 Zellen pro cm²), der den NO₂-Gehalt des Abgases erhöht, einem mittel feinzelligen Rußumwandlerkatalysator (12) mit 300 bis 800 cpi (= 46,5 bis 124 Zellen pro cm²) und einem feinzelligen, weiteren Rußumwandlerkatalysator (13) mit 600 bis 1.200 cpsi (= 93 bis 186 Zellen pro cm²) besteht.

2. Vorrichtung nach Anspruch 1, **dadurch gekennzeichnet, dass** die Rußumwandlerkatalysatoren (12, 13) aus nichtrostendem Stahlblech oder aus Keramikmonolithen bestehen.

3. Vorrichtung nach den vorhergehenden Ansprüchen, **dadurch gekennzeichnet, dass** die Oberflächen der Rußumwandlerkatalysatoren (12, 13) mit einer katalytisch aktiven Beschichtung gegenüber Kohlenstoff (C) versehen sind.

4. Vorrichtung nach Anspruch 1, **dadurch gekennzeichnet, dass**, wenn der Abgasgegendruck auf einen, im Rechner gespeicherten Wert ansteigt, eine Nacheinspritzung im Dieselmotor zur Erhöhung der Abgastemperatur erfolgt.

## Claims

1. Device to reduce the soot particles (C) contained in the exhaust gas of a diesel engine of a motor vehicle, whereby nitrogen oxides (NOₓ) and oxygen (O₂) are also contained in the exhaust gas, with an electronically controlled fuel metering system for the diesel engine, with an on-board computer or equivalent computer, with a silencer in the exhaust tract and with a sensor for the exhaust gas pressure, whereby the soot particles (C) are chemically converted into carbon dioxide (CO₂) and carbon monoxide (CO) in a soot particle catalytic converter (10), which catalytic converter consists of several catalytic converters (11, 12, 13) with differing cell structures and continuous cells,
**characterised in that** the soot particle catalytic converter (10) is integrated in the silencer and consists of an NOₓ oxidising catalytic converter (11) with a cell division of 50 to 400 cpsi (=7.75 to 62 cells per cm²), which oxidising catalytic converter increases the NO₂ content in the exhaust gas, a soot-converting catalytic converter with medium-fine cells (12) with 300 to 800 cpsi (=46.5 to 124 cells per cm²) and an additional, fine-cell soot-converting catalytic converter (13) with 600 to 1,200 cpsi (=93 to 186 cells per cm²).

2. Device in accordance with claim 1, **characterised in that** the soot-converting catalytic converters (12, 13) consist of stainless steel or ceramic monoliths.

3. Device in accordance with the previous claims, **characterised in that** the surfaces of the soot-converting catalytic converters (12, 13) are coated with a catalytically active coating with regard to carbon (C).

4. Device in accordance with claim 1, **characterised in that**, if the exhaust gas back pressure increases to a specific value stored in the computer, a post-injection is carried out in the diesel engine to increase the exhaust gas temperature.

## Revendications

1. Dispositif destiné à réduire les particules de suie (C) contenues dans les gaz d'échappement d'un moteur diesel de véhicule, les gaz d'échappement contenant également des oxydes d'azote (NOₓ) et de l'oxygène (O₂), avec un système de dosage de combustible à commande électronique pour le moteur diesel, avec un ordinateur de bord ou un ordinateur équivalent, avec un silencieux logé dans la ligne d'échappement et avec un capteur pour la contre-pression des gaz d'échappement, auquel cas les particules de suie (C) sont transformées chimiquement en dioxyde de carbone (CO₂) et en monoxyde de carbone (CO) dans un catalyseur à particules de suie (10) qui se compose de plusieurs catalyseurs (11, 12, 13) dotés chacun d'une structure alvéolée différente et d'alvéoles interconnectées,
**caractérisé en ce que** le catalyseur à particules de suie (10) est intégré au silencieux d'échappement et se compose d'un catalyseur à oxydation de NOₓ (11) pourvu d'une division des alvéoles de 50 à 400 cpsi (= 7,75 à 62 alvéoles par cm²) qui accroît la teneur en NO₂ dans les gaz d'échappement, d'un catalyseur de transformation de la suie à alvéoles mi-fines (12) de 300 à 800 cpsi (= 46,5 à 124 alvéoles par cm²) et d'un catalyseur supplémentaire de transformation de la suie à alvéoles fines (13) de 600 à 1 200 cpsi (= 93 à 186 alvéoles par cm²).

2. Dispositif selon la revendication 1, **caractérisé en ce que** les catalyseurs de transformation de la suie (12, 13) sont fabriqués en tôle d'acier inoxydable ou en monolithe céramique.

3. Dispositif selon les revendications mentionnées précédemment, **caractérisé en ce que** les surfaces des catalyseurs de transformation de la suie (12, 13) sont pourvus d'un revêtement de catalyse actif contre le carbone (C).

4. Dispositif selon la revendication 1, **caractérisé en ce que** lorsque la contre-pression des gaz d'échappement augmente à une valeur mémorisée dans l'ordinateur, une post-injection a lieu dans le moteur diesel pour accroître la température des gaz d'échappement.
